# EUROPEAN PATENT SPECIFICATION

(11) **EP 0 753 260 B1**
(45) Date of publication and mention of the grant of the patent: **12.09.2001**
(21) Application number: 96201847.9
(22) Date of filing: 03.07.1996
(51) Int. Cl.: A22C 17/00

(54) **Automatic machine for gouging, cutting of the hip and boning of legs of ham**
Automatische Maschine zum Ausbeinen von Schenkeln
Machine automatique de gougeage, d'enlèvement de la noix de l'os et de la jambe des jambons

(30) Priority: 13.07.1995 IT RE950038
(43) Date of publication of application: 15.01.1997
(73) Proprietor: M.B.A. - S.R.L., 42048 Rubiera (Reggio Emilia) (IT)
(72) Inventor: Panciroli, Luciano, Rubiera (Reggio Emilia) (IT); Biasetti, Marco, Rubiera (Reggio Emilia) (IT)
(74) Representative: Alagem Modiano, Lara S.

(56) References cited:
- DE-U- 8 815 181
- DE-U- 9 207 074
- DE-U- 9 215 620
- FR-A- 2 642 614
- FR-A- 2 644 040

## Description

The present invention relates to an automatic machine for gouging, cutting of the hip for the boning of legs of ham.

It is known that the production of legs of ham ready for cutting by the butcher and/or the consumer involves several stages of preparation, including extraction of the bone which is left inside the leg of ham during maturing and elimination of the so-called hip, i.e. that part of the animal's pelvis which is left attached to the leg of ham so as to ensure occlusion of the femoral vein.

It is also known that these delicate processing stages are currently performed for the most part manually and therefore depend on the operator's ability as well as his knowledge of animal morphology and his strength, since these operations are extremely tiring. On the other hand, since boning is carried out with perfectly sharpened blades (referred to as "gouges" whence the term "gouging" for the cutting operation), it is also known that this operation is dangerous and involves the risk of injuries.

In the art, a machine for the semi-automatic boning of legs of ham is also known, said machine being based on the use of milling tools which eliminate the bone by means of a chip-removing operation; this machine, however, has not proved to be suitable for the purpose since the high speed of rotation of the milling cutter on the one hand caused burning of the leg of ham and on the other hand caused the dispersion of splinters of bone which remained stuck in the meat of the leg itself. An example of said prior art is disclosed into FR-A-2 642 614 or FR-A-2 644 040. The technical problem which is posed therefore is that of providing an automatic machine for the gouging, cutting of the hip for boning of legs of ham which does not cause any damage to the leg of ham and ensures both a high productivity and high level of safety for the operators. Within the scope of this problem it is also required that the machine should use chipless cutting tools so as to avoid the dispersion of fragments of bone and the like.

These results are obtained by the present invention, which relates to an automatic machine for gouging, cutting of the hip for boning legs of ham, comprising at least one fixed frame and at least one carriage for supporting the leg of ham, provided with means for gripping and centring the bone of the leg of ham and moved by associated feeding means, there also being provided at least one station for loading the leg of ham onto said carriage and for front upper and lower gouging, at least one lateral gouging station, at least one station for lateral gouging on the side where the hip is, at least one station for cutting the hip and at least one station for unloading the leg of ham from the carriage.

Further details may be obtained from the following description, with reference to the accompanying drawings, in which:
Figure 1 shows a front view of the machine according to the invention;
Figure 2 shows a plan view of the machine according to Figure 1;
Figure 3 shows a side view of the loading, centring and gouging station;
Figure 3a shows a detail of the shape of the knife for front gouging;
Figure 4 shows a plan view of the station according to Figure 3;
Figure 5 shows a side view of the lateral gouging station;
Figure 5a shows a detail of the cutting tool;
Figure 6 shows a plan view of the lateral gouging station;
Figure 7 shows a side view of the station for lateral gouging on the hip side;
Figure 7a shows a detail of the cutting tool used for the station according to Figure 7;
Figure 8 shows a plan view of the station for lateral gouging on the hip side;
Figure 9 shows a side view of the station for cutting the hip;
Figure 9a shows a detail of the cutting blade of the station according to Figure 9;

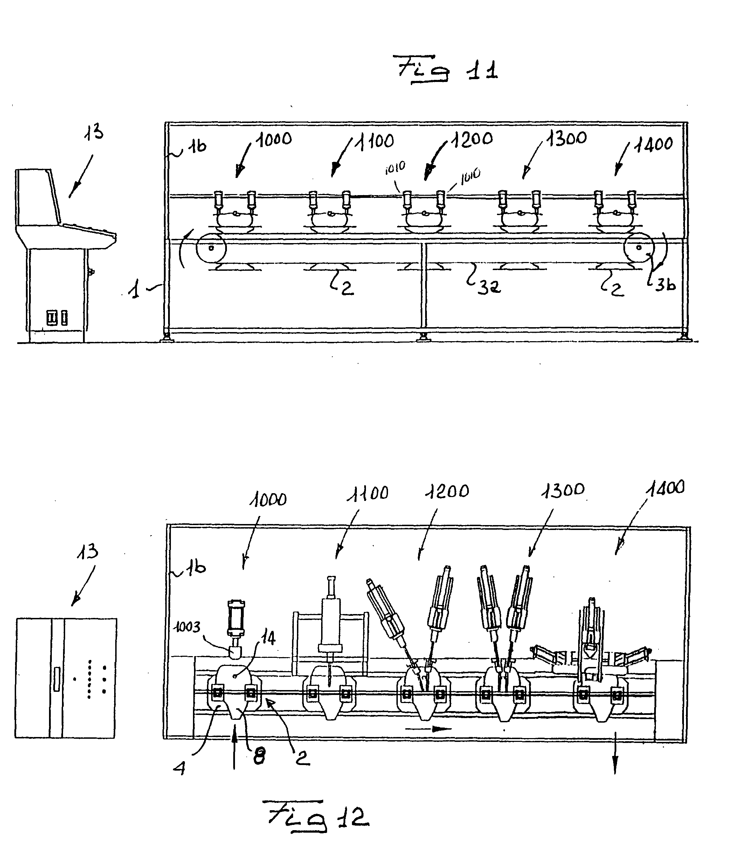

Figure 10 shows a plan view of the hip-cutting station according to Figure 9;
Figures 11 to 17 show an alternative example of embodiment of the machine in which there is provided initial imprinting means and means for adjusting the height of the stations in relation to the height of the femoral head with respect to the surface on which the leg of ham rests;
Figure 18 shows a plan view of a further alternative example of embodiment of the machine according to the invention.

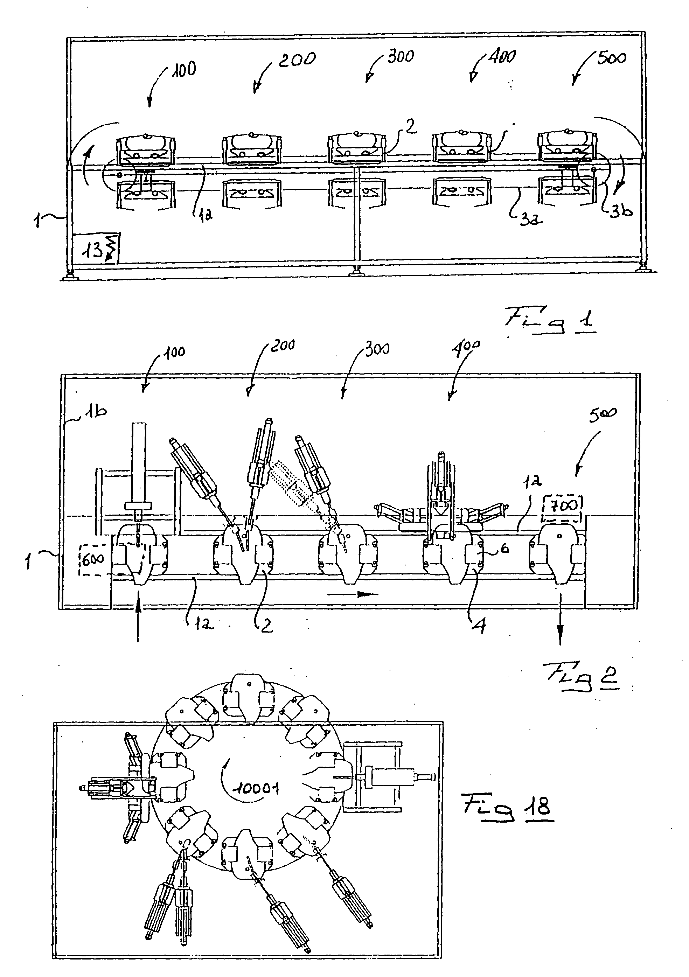

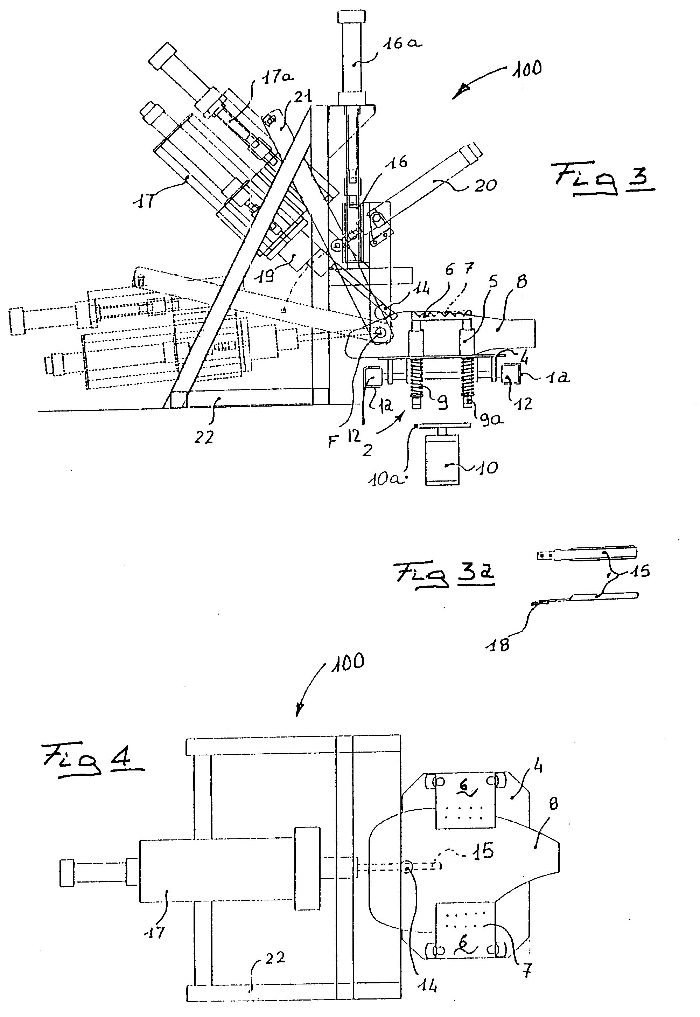

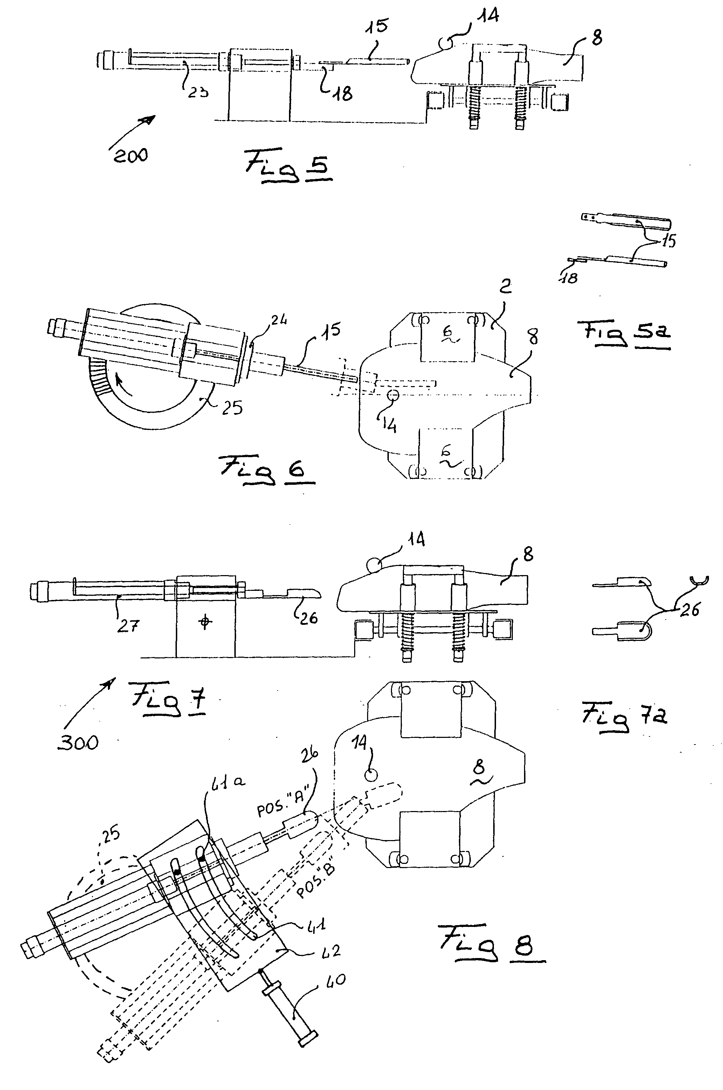

As shown in Figures 1 and 2, the machine for boning legs of ham according to the invention is composed of a tubular support frame 1, comprising two horizontal parallel guides 1a having mounted on them carriages 2 made to perform a translatory movement by an actuating device 3 consisting of an endless pulley 3a actuated by a stepper motor 3b, which moves forward the carriages themselves for positioning thereof opposite the successive work-stations described below and for the subsequent return movement of the said carriages to the loading station. Said parallel guides 1a consist of C-shaped sections and have travelling inside them wheels 12 fixed to the carriages 2. The machine is motorized by known means comprising a motor reducer, the speed of which is adjusted via electronic control and command means situated inside a corresponding cabinet 13. The tubular frame is completed by a security panel 1b. Each carriage 2 consists of a surface 4 for supporting the leg of ham 8 with contact locators 5 which can be adjusted according to the size of the leg of ham itself, two upper horizontal plates 6 provided on their inner surface with needles 7 for gripping the skin of the leg of ham 8; clamping and release of the plates 6 on the leg of ham is performed by means of vertical pins 9a on which pre-tensioned springs 9 are mounted, said pins being actuated by associated cylinders 10 in the region of the loading and unloading stations, which, acting against said pins, raise the plates 6 against the recall action of the springs 9, allowing introduction of the leg of ham. The machine according to the invention comprises substantially five work-stations indicated in the figures by 100, 200, 300, 400 and 500, respectively, for loading, centring and front gouging; lateral gouging on a first side, lateral gouging on the hip side; cutting of the hip; release and unloading of the leg of ham. In the loading station 100 the leg of ham 8 is initially positioned on the carriage with subsequent closing of the retaining plates 6 with respect to the head 14 of the femoral bone to be removed. Once the leg of ham has been positioned, the stage involving upper and lower front gouging is started, being performed by means of a blade 15 (Figure 3a) which has a concave shape and is mounted on leaf springs 18 and moved by means of an actuating group mounted on a fixed structure 22. Said actuating group comprises a first slide 16 actuated by pneumatic members 16a, which cause the vertical translation of a pair of slides 17, 17a which may also rotate angularly with respect to the leg of ham, being mounted on a support lever 21 hinged on a pivot F and actuated by a cylinder 20. The three slides 16, 17 and 17a, which are made to perform a translatory movement by associated pneumatic command members, cause entry of the knife into the leg of ham in accordance with the following sequence: initially the slide 16 brings the blade 15 into the vicinity of the leg of ham, then the slide 17a intervenes and causes the blade itself to penetrate partially into the top part of the leg of ham; at this point the cylinder 20 intervenes and causes rotation of the slides 17, 17a through an angle of 22° (continuous line in Figure 3) so as to cause the blade to pentrate further into the meat, causing it at the same time to rotate about the bone.

Once it has reached the new position, the slide 17 pushes the blade (gouge) into the meat of the leg of ham, along the entire length of the blade itself, following the profile of the femoral bone, thus completing front upper gouging. Once front upper gouging has been completed, the blade 15 is extracted and rotated through 180° about its longitudinal axis via an actuator 19 fixed to the slide 17; at the same time the slide 17 is made to perform a further rotation by means of the said cylinders 20 and rod 21, which cause a further rotation of the slide itself, about the fulcrum F, through an angle of 45° with respect to the transverse axis of the head of the femur. Once the new position has been reached, the sequence described above is repeated so as to perform front lower gouging. Once front gouging has been terminated, the carriage is moved forwards to the next station 200 for first lateral gouging (Figure 5), which comprises a knife-carrying group consisting of a slide 23 provided with a rotating actuator 24 which allows the blade 15 to be rotated through suitable angles about its axis.

In this case also, the blade 15 is connected to the operating mechanism by means of leaf springs 18 for providing the flexibility necessary for following the irregular profile of the bone. The entire station is moreover mounted on a bearing ring 25 which allows rotation of the station through a predetermined angle about the longitudinal axis of the leg of ham so as to cause entry of the blade always on the opposite side to the hip, whether the leg of ham is a right-hand side or left-hand side one and whatever the orientation of the latter on the conveying carriage. Once the lateral gouging stage has been terminated, the carriage is moved forwards to the station 300 for lateral gouging on the hip side, which is a piece of meat which is very rich in tendons and which has an additional bone of considerable thickness inside it. The station (Figure 7) has a slide 27 inclined and rotatable on the horizontal plane about the longitudinal axis of the leg of ham by means of a cylinder 40 acting on the slide itself which performs the rotational movement guided by a pair of pins 41a designed to travel inside a pair of curved parallel eyelets 41 formed on a fixed support 42.

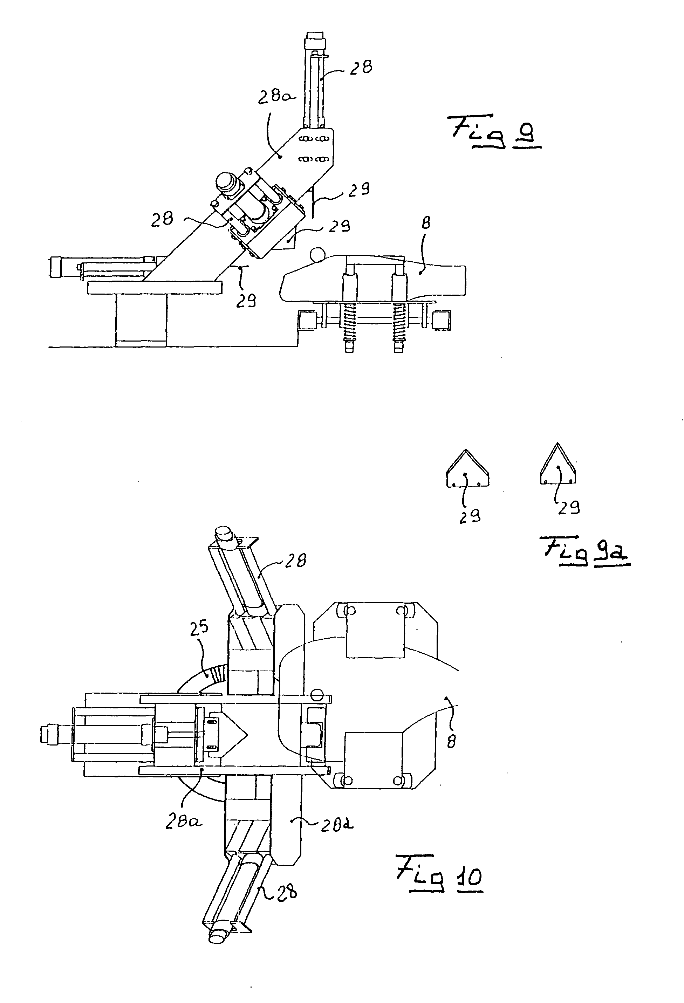

A concave blade 26 is fitted to the slide 27 (Fig. 7a) As illustrated in Figure 8, the slide is positioned in a first angular position A and the blade is pushed partially into the meat as far as said bone of the hip, which, being of considerable thickness, does not allow total entry of the blade; then a further rotation, as far as the position B, with simultaneous forward movement of the blade, allows the latter to be pushed in for cutting and denervation of the tendons. In this case, also, it is possible to perform angular displacements of the entire group, which can be effected by means of a bearing ring illustrated in broken lines in Figure 8, so as to be able to process right-hand or left-hand legs of ham, irrespective of their orientation on the conveying carriage. Then the carriage is moved forwards to the station 400 for cutting the hip.

This station comprises four pneumatic guides 28 mounted on a support 28a, each carrying a triangular blade 29 (Figure 9a). These guides 28 are arranged around the leg of ham so that insertion of the triangular blades 29 into the meat produces the same number of triangular cuts with a common vertex, resulting in a substantially pyramidal cutting shape corresponding to the pyramidal shape of the hip to be removed. The support 28a is mounted so as to be pivotable through an angle of approximately 40° about the transverse axis of the femur so that it is possible to process the legs of ham irrespective of their right-hand or left-hand orientation on the conveying carriage. Once the hip has been cut, the carriage 4 is moved forwards to the unloading station where the said cylinder 10 causes opening of the plates 7 so as to allow removal or unloading of the leg of ham from the machine itself for extraction of the bone which, at this point, can be performed much more easily with a small amount of physical effort. Once the leg of ham has been unloaded, the carriage is able to return to the loading station.

As shown in Figure 1, this return movement takes place below the working surface of the machine.

As illustrated in Figures 11 and 12, the machine according to the invention may be realized in a further configuration whereby an apparatus 1000 is provided in the region of the first loading station, said apparatus being designed to perform a so-called "imprinting" operation, i.e. a circular incision around the femoral head 14 of the bone in the leg of ham 8.

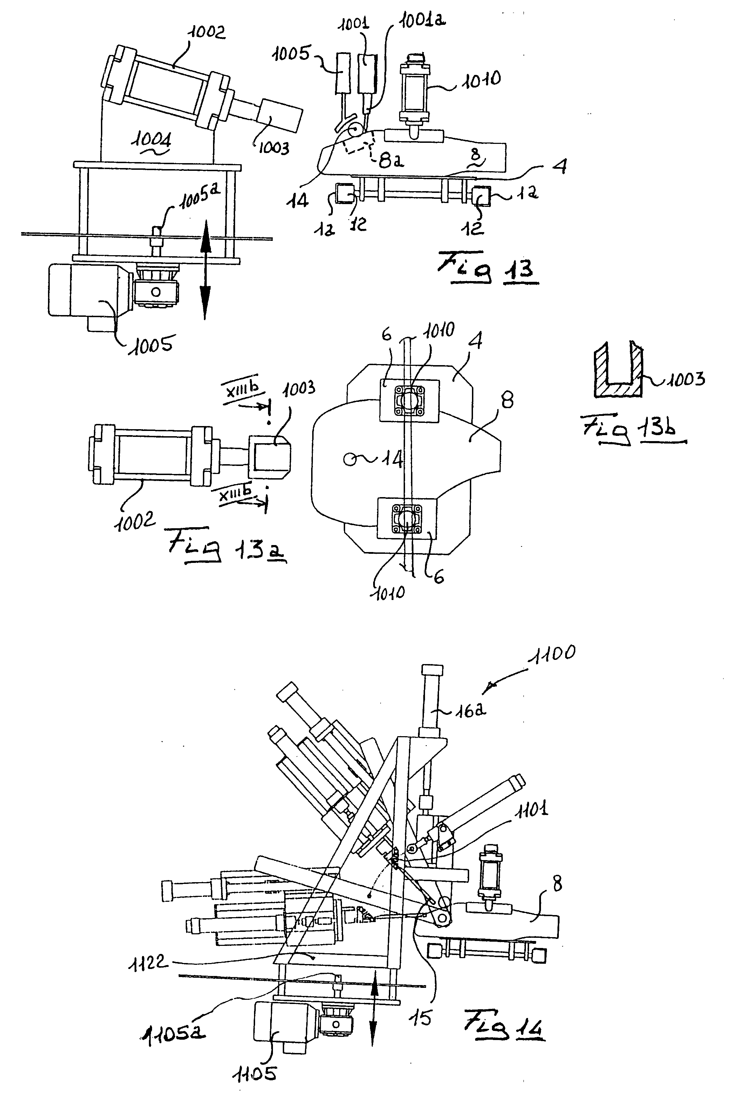

More in detail (Figures 13 and 13a) said loading station comprises a fixed locating element 1005 which receives, against it, the femoral head 14 of the leg of ham 8 resting on the surface 4 of the carriage 2 and retained on the latter by the upper plates 6 actuated in the vertical direction by respective cylinders 1010 fixed to the structure of the carriage, as shown schematically in Figure 13. Additional cylinders 1010 are arranged in the region of each work-station in order to retain the leg of ham during the processing stages.

Once it has been positioned and clamped, the leg of ham enters into contact with the telescopic rod 1001a of a sensor 1001 designed to measure the distance of the femoral head 14 with respect to the surface 4 supporting the leg of ham and transmit a corresponding electrical signal to the control cabinet 13 which in turn sends corresponding electrical command signals to suitable vertical positioning means of the work-stations described further below.

The said "imprinting" station has a cylinder 1002 designed to cause the translatory movement of a blade 1003, the shape of which is shown in the cross-section of Figure 13b. Said blade, penetrating into the leg of ham 8, causes an incision (imprint) - indicated by the broken line 8a in Figure 13 - in the vicinity of the femoral head 14, designed to facilitate the entry of the cutting blades of the following work-stations.

Said cylinder 1002 is mounted on an inclined support 1004 fixed to the spindle 1005a of a motor reducer 1005 which, actuated by the control system 13 on the basis of the data relating to the height of the femoral head 14 from the surface 4 of the carriage 2, causes a corresponding raising movement of the said support 1004 so that, for the given leg of ham being processed at that moment, the blade 1003 penetrates in the exact imprint position.

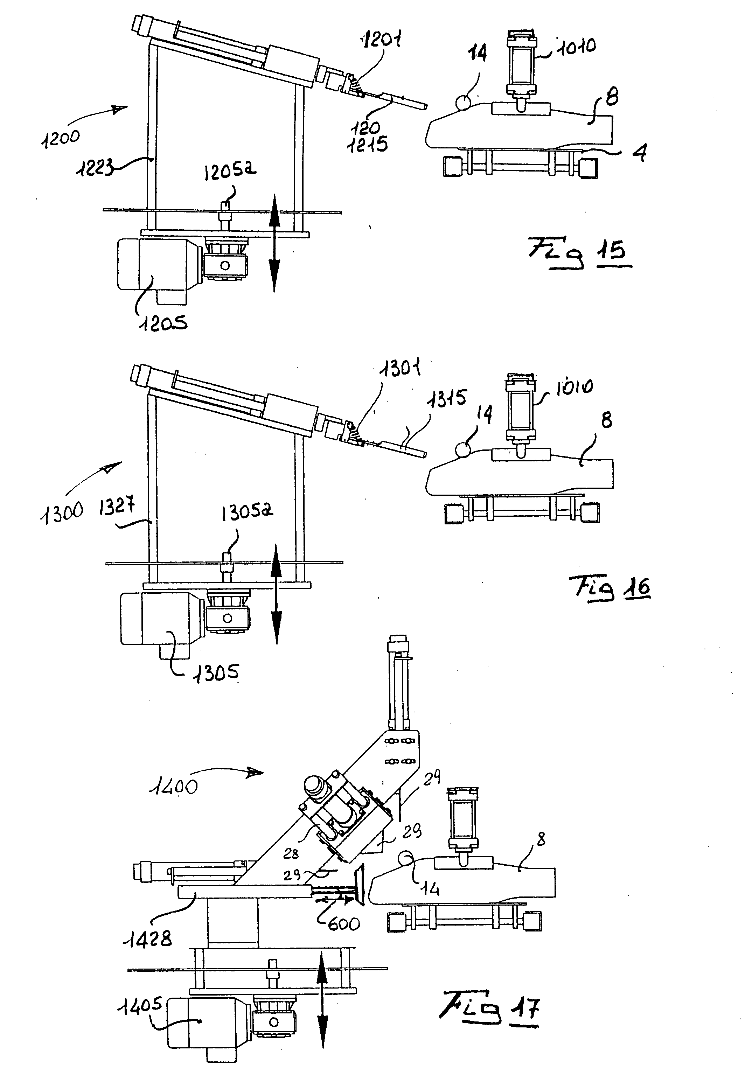

As illustrated in Figures 14, 15, 16 and 17, as a result of said imprinting incision 8a, the lateral, upper and lower gouging blades, respectively indicated by 15, 1215 and 1315, of the respective stations 1100, 1200 and 1300 may be constrained by means of simple springs 1101, 1201 and 1301, respectively, since it is no longer necessary for the said blades to rotate and follow the path along the femoral bone, the preliminary incision (imprint) for entry of the blade having already been performed in the first entry station 1000.

Each station 1000, 1100, 1200, 1300, 1400 is moreover mounted on respective supports fixed to respective spindles 1205a, 1305a, 1405a of as many motor reducers 1205, 1305, 1405 designed to effect raising of the individual cutting apparatus of the various gouging and hip-cutting stations.

In the cutting sequence, therefore, when the individual legs of ham 8 pass through, each station erases the previous information relating to the height of the femoral head 14 of the leg of ham processed and sets itself to a new value relating to the height of the femoral head 14 of the leg of ham 8 which is about to reach the station itself for the corresponding cutting operation, thus making it possible to process legs of ham of any size without having to perform a preliminary selection in order to obtain uniform sets of legs of ham in accordance with which the machine is tooled up.

Many variations may be introduced as regards the realization of the parts which make up the invention, without thereby departing from the protective scope of the present invention, as defined by the claims which follow: for example automatic means may be provided, indicated by 600 (Figure 2 and Figure 17) for loading and unloading the legs of ham, as well as means, indicated by 700 in Figure 2, for gripping and removing the bone, arranged in the region of the unloading station 500.

As illustrated in Figure 18, the machine according to the invention may also be constructed in the form of a rotating machine instead of a rectinlinear machine as in the example described. In this case the various stations are installed on a rotating table 10001 made to rotate by associated devices known per se and therefore not illustrated. Both in the case of a rectilinear machine and in the case of a rotating machine, each cutting group of the individual stations may be duplicated and positioned in a fixed manner in a suitable angular position with respect to the longitudinal axis of the. bone, both in order to increase the productivity of the machine and keep the cutting group itself still, but also so as to be able to process right-hand and left-hand side legs of ham, irrespective of their orientation on the conveying carriage.

In order to automate entirely the cycle, it is also possible to provide detection elements such as inductive or optical sensors and the like, designed to determine the orientation of the leg of ham on the carriage and correspondingly activate/deactivate the various cutting stations and/or the positioning of each station with respect to the longitudinal axis of the leg of ham for correct processing thereof corresponding to its right-hand or left-hand orientation on the carriage.

## Claims

1. Automatic machine for gouging, cutting of the hip for boning of legs of ham (8), **characterized in that** it comprises at least one fixed frame (1) and at least one carriage (2) for supporting the leg of ham, provided with means (5;1005,6,7) for gripping and centring the bone of the leg of ham and moved by associated feeding means (3a, 3b), there also be provided at least one station (100;1000) for loading the leg of ham on said carriage (2) and for front upper and lower gouging, at least one lateral gouging station (200;1200), at least one station (300;1300) for lateral gouging on the side where the hip is, at least one station (400;1400) for cutting the hip and at least one station (500) for unloading the leg of ham from the carriage (2).

2. Machine according to Claim 1, **characterized in that** it also comprises devices (600) for automatic loading and unloading of the legs of ham (8) from the carriage (2).

3. Machine according to Claim 1, **characterized in that** it also comprises devices (700) for gripping and extracting the bone, arranged in the region of the unloading station (500).

4. Machine according to Claim 1, **characterized in that** it is rectilinear.

5. Machine according to Claim 1, **characterized in that** it is rotating.

6. Machine according to Claim 1, **characterized in that** said front upper and lower gouging station comprises a fixed support (22) carrying a first slide (16) movable vertically owing to the action of associated means (16a) and two additional slides (17,17a), one (17) of which carrying the blade (15), designed to cause translation of the blade itself towards/away from the leg of ham (8), and a device (20, 21) designed to cause rotation of the entire group through predetermined angles with respect to the transverse axis of the femoral head.

7. Machine according to Claims 1 and 6, **characterized in that** said rotations of the front gouging group about the transverse axis of rotation are respectively through angles of between 10° and 35° for the initial entry of the blade and 35° and 55° for the subsequent penetration of the blade.

8. Machine according to Claims 1 and 6, **characterized in that** said cutting element is fixed to the slide (17) with the intervening arrangement of a device (19) for causing rotation of the cutting element (15) itself about its longitudinal axis.

9. Machine according to Claims 1 and 6, **characterized in that** said cutting element consists of a blade (15) curved about its longitudinal axis and connected to the actuating device via resilient means (18).

10. Machine according to Claim 1, **characterized in that** said lateral gouging station comprises a slide (23) movable rotatably, via associated means (25), about an axis perpendicular to the support surface, on which the device for actuating the knife (15) is mounted.

11. Machine according to Claim 1, **characterized in that** said lateral gouging station, on the side where the hip is located, comprises a slide (27) inclined and rotatable about an axis perpendicular to the support surface, there being mounted on said slide the device for causing rotation of the cutting element (26) about its axis and translation thereof towards/away from the leg of ham.

12. Machine according to Claims 1 and 11, **characterized in that** said rotation of the cutting group about the axis perpendicular to the support surface corresponds to an angle of between 10° and 20°.

13. Machine according to Claims 1 and 11, **characterized in that** said cutting element consists of a blade (26) in the form of a spatula with its tip rounded and curved about its longitudinal axis.

14. Machine according to Claim 1, **characterized in that** said station for cutting the hip consists of a support (28a) carrying pneumatic guides (28) arranged at predetermined relative angular distances and each carrying the devices for the translatory feeding of a cutting element (29).

15. Machine according to Claims 1 and 13, **characterized in that** said cutting element consists of a triangular blade (29) with its vertex directed towards the leg of ham.

16. Machine according to Claim 1, **characterized in that** optical, electromagnetic and similar devices are provided for automatically detecting the right-hand or left-hand orientation of the leg of ham, after clamping thereof on the carriage (2).

17. Machine according to Claim 1, **characterized in that**, in the region of said loading station, there are provided contact means (1005) for positioning the leg of ham and means (1001) for detecting the height of the femoral head (14) with respect to the surface (4) of the carriage (2).

18. Machine according to Claims 1 and 17, **characterized in that**, in the region of said loading station, there is provided an apparatus for imprinting the leg of ham (8), designed to perform a first incision in the region of the femoral head (14).

19. Machine according to Claim 18, **characterized in that** said imprinting apparatus comprises a cylinder (1002) mounted on a support (1004) translatable vertically following actuation of associated actuating means (1005a, 1005) and carrying an incision blade (1003).

20. Machine according to Claim 18, **characterized in that** said vertical actuation means of the imprinting apparatus consist of a motor reducer (1005) controlled by the programming control unit (13).

21. Machine according to Claim 18, **characterized in that** said vertical actuating means of the imprinting apparatus cause raising of the latter relative to the plane of the machine, corresponding to the distance of the femoral head (14) of the leg of ham (8) from the surface (4) of the carriage (2).

22. Machine according to Claims 1 and 17, **characterized in that** each cutting station (1100, 1200, 1300, 1400) is arranged on associated supports (1223, 1327, 1428) movable in the vertical direction via associated actuating means (1105, 1205, 1305, 1405).

23. Machine according to Claims 1 and 17, **characterized in that** the cutting blades for lateral gouging are arranged inclined with respect to the surface for supporting the leg of ham.

24. Machine according to Claims 1 and 17, **characterized in that** said legs of ham are retained on the support surface (4) by means of plates actuated by cylinders (1010).

## Patentansprüche

1. Automatische Maschine zum Ausbeinen von Schenkeln (8)
**dadurch gekennzeichnet, dass** sie wenigstens einen festen Rahmen (1) und wenigstens einen mit Mitteln (5; 1005, 6, 7) zum Greifen und Zentrieren des Schenkelbeins ausgestatteten und durch zugehörige Zuführmittel (3a, 3b) bewegten Wagen (2) zum Tragen des Schenkels, umfasst, wobei ferner wenigstens eine Station (100; 1000) zum Laden des Schenkels auf den Wagen (2) und zum vorderen oberen und unteren Aushöhlen, wenigstens eine seitliche Aushöhlstation (200; 1200), wenigstens eine Station (300; 1300) zum seitlichen Aushöhlen auf der Seite,auf der sich die Hüfte befindet, wenigstens eine Station (400; 1400) zum Schneiden der Hüfte und wenigstens eine Station (500) zum Entladen des Schenkels vom Wagen (2) angeordnet ist.

2. Maschine nach Anspruch 1,
**dadurch gekennzeichnet, dass** sie ferner Vorrichtungen (600) zum automatischen Beladen und Entladen des Schenkels (8) vom Wagen (2) umfasst.

3. Maschine nach Anspruch 1,
**dadurch gekennzeichnet, dass** sie ferner im Bereich der Entladestation (500) angeordnete Vorrichtungen (700) zum Greifen und Auslösen des Beins umfasst.

4. Maschine nach Anspruch 1,
**dadurch gekennzeichnet, dass** sie geradlinig ist.

5. Maschine nach Anspruch 1,
**dadurch gekennzeichnet, dass** sie rotierend ist.

6. Maschine nach Anspruch 1,
**dadurch gekennzeichnet, dass** die Station zum vorderen oberen und unteren Aushöhlen einen festen Träger (22) umfasst, der einen aufgrund der Betätigung durch zugehörige Mittel (16a) vertikal bewegbaren ersten Schieber (16) und zwei zusätzliche Schieber (17, 17a), von denen einer (17), der die Klinge (15) trägt, so gestaltet ist, dass er eine Versetzung der Klinge selber zum/weg vom Schenkel (8) verursacht und eine Vorrichtung (20, 21), die so gestaltet ist, dass sie eine Drehung der gesamten Gruppe um vorbestimmte Winkel bezüglich der Querachse des Oberschenkelkopfes verursacht, trägt.

7. Maschine nach Anspruch 1 und 6,
**dadurch gekennzeichnet, dass** die Drehungen um die Querdrehachse der Gruppe zum vorderen Aushöhlen jeweils um Winkel zwischen 10° und 35° für den anfänglichen Eintritt der Klinge und 35° und 55° für das darauffolgende Eindringen der Klinge erfolgen.

8. Maschine nach Anspruch 1 und 6,
**dadurch gekennzeichnet, dass** das Schneidelement am Schieber (17) befestigt ist, mit der zwischenliegenden Anordnung einer Vorrichtung (19) zum Drehen des Schneidelements (15) selber um seine Längsachse.

9. Maschine nach Anspruch 1 und 6,
**dadurch gekennzeichnet, dass** das Schneidelement aus einer um seine Längsachse gekrümmte und mit der Betätigungsvorrichtung über Federmittel (18) verbundenen Klinge (15) besteht.

10. Maschine nach Anspruch 1,
**dadurch gekennzeichnet, dass** die seitliche Aushöhlstation einen Schieber (23) umfasst, der über zugehörige Mittel (25) um eine zur Stützfläche, auf welcher die Vorrichtung zum Betätigen des Messers (15) montiert ist, senkrechten Achse rotierend bewegbar ist.

11. Maschine nach Anspruch 1,
**dadurch gekennzeichnet, dass** die seitliche Aushöhlstation auf der Seite, auf der sich die Hüfte befindet, einen geneigten und um eine zur Stützfläche senkrechten Achse rotierbaren Schieber (27) umfasst, wobei auf den Schieber die Vorrichtung zum Drehen des Schneidelements (26) um seine Achse und Versetzung zum/weg vom Schenkel montiert ist.

12. Maschine nach Anspruch 1 und 11,
**dadurch gekennzeichnet, dass** die Drehung der Schneidgruppe um die zur Stützfläche senkrechten Achse einem Winkel zwischen 10° und 20° entspricht.

13. Maschine nach Anspruch 1 und 11,
**dadurch gekennzeichnet, dass** das Schneidelement aus einer Klinge (26) in Form eines Spatels mit abgerundeter Spitze, der um seine Längsachse gekrümmt ist, besteht.

14. Maschine nach Anspruch 1,
**dadurch gekennzeichnet, dass** die Station zum Schneiden der Hüfte aus einem Träger (28a) besteht, der in vorbestimmten Winkelabständen angeordnete pneumatische Führungen (28) trägt, von denen jede die Vorrichtungen zum translatorischen Zuführen eines Schneidelements (29) trägt.

15. Maschine nach Anspruch 1 und 13,
**dadurch gekennzeichnet, dass** das Schneidelement aus einer mit ihrer Spitze zum Schenkel gerichteten dreieckigen Klinge (29) besteht.

16. Maschine nach Anspruch 1,
**dadurch gekennzeichnet, dass** optische, elektromagnetische und ähnliche Vorrichtungen zum automatischen Erfassen der rechtshändigen oder linkshändigen Orientierung des Schenkels, nach dessen Klammern auf den Wagen (2), angeordnet sind.

17. Maschine nach Anspruch 1,
**dadurch gekennzeichnet, dass** im Bereich der Ladestation Kontaktmittel (1005) zum Positionieren des Schenkels und Mittel (1001) zum Erfassen der Höhe des Oberschenkelkopfes (14) bezüglich der Oberfläche (4) des Wagens (2) angeordnet sind.

18. Maschine nach Anspruch 1 und 17,
**dadurch gekennzeichnet, dass** im Bereich der Ladestation ein Apparat zum Eindrücken des Schenkels (8) angeordnet ist, der so gestaltet ist, dass ein erster Einschnitt im Bereich des Oberschenkelkopfes (14) erfolgt.

19. Maschine nach Anspruch 18,
**dadurch gekennzeichnet, dass** der Eindrückapparat einen auf einen Träger (1004) montierten Zylinder (1002) umfasst, der durch die Betätigung zugehöriger Betätigungsmittel (1005a, 1005) vertikal versetzbar ist und eine Einschneideklinge (1003) trägt.

20. Maschine nach Anspruch 18,
**dadurch gekennzeichnet, dass** die vertikalen Betätigungsmittel der Eindrückvorrichtung aus einem von der Programmsteuereinheit (13) gesteuerten Motorreduzierstück (1005) bestehen.

21. Maschine nach Anspruch 18,
**dadurch gekennzeichnet, dass** die vertikalen Betätigungsmittel der Eindrückvorrichtung ein Heben der letzteren bezüglich der Ebene der Maschine, entsprechend dem Abstand des Oberschenkelkopfes (14) des Schenkels (8) von der Oberfläche (4) des Wagens (2), verursachen.

22. Maschine nach Anspruch 1 und 17,
**dadurch gekennzeichnet, dass** jede Schneidstation (1100, 1200, 1300, 1400) auf zugehörigen Trägern (1223, 1327, 1428) angeordnet ist, die in der vertikalen Richtung durch zugehörige Betätigungsmittel (1105, 1205, 1305, 1405) bewegbar sind.

23. Maschine nach Anspruch 1 und 17,
**dadurch gekennzeichnet, dass** die Schneidklingen zum seitlichen Aushöhlen zur Oberfläche zum Stützen des Schenkels geneigt angeordnet sind.

24. Maschine nach Anspruch 1 und 17,
**dadurch gekennzeichnet, dass** die Schenkel auf der Stützfläche (4) mittels durch Zylinder (1010) betätigte Platten gehalten werden.

## Revendications

1. Machine automatique de gougeage et d'enlèvement de l'os de la hanche pour désosser des jambons entiers (8), **caractérisée en ce qu'**elle comprend au moins un châssis fixe (1) et au moins un chariot (2) pour supporter le jambon, équipé d'un dispositif (5 ; 1005, 6, 7) de prise et de centrage de l'os du jambon et déplacé par un dispositif d'avance associé (3a, 3b), et elle comprend également au moins une station (100 ; 1000) de chargement du jambon sur le dit chariot (2) et de gougeage supérieur et inférieur avant, au moins une station de gougeage latéral (200 ; 1200), au moins une station (300 ; 1300) de gougeage latéral sur le côté où se trouve la hanche, au moins une station (400 ; 1400) de coupe de la hanche et au moins une station (500) pour décharger le jambon du chariot (2).

2. Machine selon la revendication 1, **caractérisée en ce qu'**elle comprend également des dispositifs (600) pour charger et décharger automatiquement les jambons (8) du chariot (2).

3. Machine selon la revendication 1, **caractérisée en ce qu'**elle comprend également des dispositifs (700) pour saisir et extraire l'os, placés dans la région de la station de déchargement (500).

4. Machine selon la revendication 1, **caractérisée en ce qu'**elle est rectiligne.

5. Machine selon la revendication 1, **caractérisée en ce qu'**elle est rotative.

6. Machine selon la revendication 1, **caractérisée en ce que** la dite station de gougeage supérieur et inférieur avant comprend un support fixe (22) portant un premier coulisseau (16), déplaçable verticalement sous l'action d'un dispositif associé (16a), et deux coulisseaux additionnels (17, 17a) dont l'un (17) porte la lame (15), prévus pour engendrer la translation de la lame elle-même de sorte qu'elle se rapproche / s'éloigne du jambon (8), et un dispositif (20, 21) prévu pour engendrer une rotation du groupe entier suivant des angles prédéterminés par rapport à l'axe transversal de la tête de fémur.

7. Machine selon les revendications 1 et 6, **caractérisée en ce que** les dites rotations du groupe de gougeage avant autour de l'axe de rotation transversal sont respectivement suivant des angles compris entre 10° et 35° pour l'entrée initiale de la lame, et entre 35° et 55° pour la suite de la pénétration de la lame.

8. Machine selon les revendications 1 et 6, **caractérisée en ce que** le dit élément de coupe est fixé au coulisseau (17) avec interposition d'un dispositif (19) pour effectuer une rotation de l'élément de coupe (15) lui-même autour de son axe longitudinal.

9. Machine selon les revendications 1 et 6, **caractérisée en ce que** le dit élément de coupe consiste en une lame (15) incurvée autour de son axe longitudinal et reliée au dispositif de commande par des moyens élastiques (18).

10. Machine selon la revendication 1, **caractérisée en ce que** la dite station de gougeage latéral comprend un coulisseau (23) déplaçable de façon tournante, par l'intermédiaire d'un dispositif associé (25), autour d'un axe perpendiculaire à la surface de support, sur lequel le dispositif de commande de la lame (15) est monté.

11. Machine selon la revendication 1, **caractérisée en ce que** la dite station de gougeage latéral, du côté où se trouve la hanche, comprend un coulisseau (27) incliné et tournant autour d'un axe perpendiculaire à la surface de support, le dit coulisseau portant le dispositif engendrant la rotation de l'élément de coupe (26) autour de son axe et sa translation de rapprochement / éloignement par rapport au jambon.

12. Machine selon les revendications 1 et 11, **caractérisée en ce que** la dite rotation du groupe de coupe autour de l'axe perpendiculaire à la surface de support correspond à un angle compris entre 10° et 20°.

13. Machine selon les revendications 1 et 11, **caractérisée en ce que** le dit élément de coupe consiste en une lame (26) en forme de spatule dont le bout est arrondi et qui est incurvée autour de son axe longitudinal.

14. Machine selon la revendication 1, **caractérisée en ce que** la dite station de coupe de la hanche consiste en un support (28a) portant des guides pneumatiques (28) agencés à des distances angulaires relatives prédéterminées, et portant chacun les dispositifs d'avance en translation d'un élément de coupe (29).

15. Machine selon les revendications 1 et 13, **caractérisée en ce que** le dit élément de coupe consiste en une lame triangulaire (29) dont le sommet est dirigé vers le jambon.

16. Machine selon la revendication 1, **caractérisée en ce que** des dispositifs optiques, électromagnétiques et similaires sont prévus pour détecter automatiquement l'orientation à droite ou à gauche du jambon, après blocage de celui-ci sur le chariot (2).

17. Machine selon la revendication 1, **caractérisée en ce que**, dans la région de la dite station de chargement, il est prévu un dispositif de contact (1005) pour positionner le jambon, et un dispositif (1001) pour détecter la hauteur de la tête de fémur (14) par rapport à la surface (4) du chariot (2).

18. Machine selon les revendications 1 et 17, **caractérisée en ce que**, dans la région de la dite station de chargement, il est prévu un appareil pour créer une empreinte dans le jambon (8), conçu pour effectuer une première incision dans la région de la tête de fémur (14).

19. Machine selon la revendication 18, **caractérisée en ce que** le dit appareil de création d'empreinte comprend un vérin (1002) monté sur un support (1004) qui peut effectuer une translation verticale après activation d'un dispositif de commande associé (1005a, 1005), et portant une lame d'incision (1003).

20. Machine selon la revendication 18, **caractérisée en ce que** le dit dispositif de commande verticale de l'appareil de création d'empreinte consiste en un moto-réducteur (1005) commandé par l'unité de commande de programmation (13).

21. Machine selon la revendication 18, **caractérisée en ce que** le dit dispositif de commande verticale de l'appareil de création d'empreinte provoque le relevage de ce dernier par rapport au plan de la machine, correspondant à la distance de la tête de fémur (14) du jambon (8) par rapport à la surface (4) du chariot (2).

22. Machine selon les revendications 1 et 17, **caractérisée en ce que** chaque station de coupe (1100, 1200, 1300, 1400) est agencée sur des supports associés (1223, 1327, 1428) déplaçables dans la direction verticale par des dispositifs de commande associés (1105,1205,1305,1405).

23. Machine selon les revendications 1 et 17, **caractérisée en ce que** les lames de coupe pour le gougeage latéral sont inclinées par rapport à la surface supportant le jambon.

24. Machine selon les revendications 1 et 17, **caractérisée en ce que** les dits jambons sont retenus sur la surface de support (4) au moyen de plaques actionnées par des vérins (1010).
